# EUROPEAN PATENT SPECIFICATION

(11) **EP 0 328 977 B1**
(45) Date of publication and mention of the grant of the patent: **10.05.1995**
(21) Application number: 89101981.2
(22) Date of filing: 04.02.1989
(51) Int. Cl.: H04L 7/04

(54) **Word synchronization system**
Wortsynchronisiersystem
Système de synchronisation de mots

(30) Priority: 13.02.1988 JP 31137/88
(43) Date of publication of application: 23.08.1989
(73) Proprietor: NIPPON TELEGRAPH AND TELEPHONE CORPORATION, Shinjuku-ku, Tokyo 163-19 (JP)
(72) Inventor: Aikawa, Satoru, Yokohama-shi Kanagawa 236 (JP); Saito, Yoichi, Yokosuka-shi Kanagawa 239 (JP)
(74) Representative: Sparing Röhl Henseler Patentanwälte

(56) References cited:
- EP-A- 0 195 421
- US-A- 3 452 328
- US-A- 3 550 082
- US-A- 3 571 794
- US-A- 4 481 648

## Description

The invention concerns a word synchronization system comprising a syndrom calculating circuit which receives as input encoded signals including error correction codes and calculates a syndrome as an indication of a synchronization state out of a word phase, a controlling means which changes the word phase when the syndrome calculated by the syndrome calculating circuit is not zero to calculate the syndrome again and repeats the operation until the time the syndrome becomes zero for the sequence of M times, and a synchronization slip detecting circuit to output a synchronization slip decision in the word synchronization when a particular syndrome is repeatedly detected.

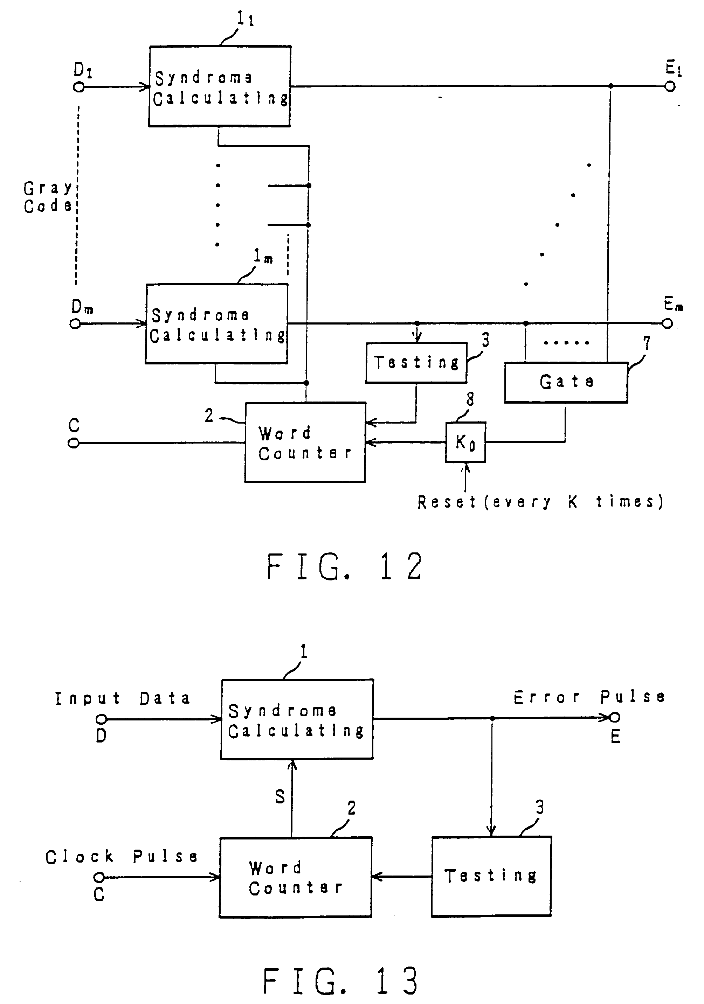

The basic structure of the prior art in the word synchronization circuits is shown in FIG. 13. In the figure, a syndrome calculating circuit 1 calculates a syndrome of input data word by word based on the word synchronization signals outputted from a word counter 2, and an error pulse E is outputted when the calculated syndrome is not zero. A testing circuit 3 receives as input the error pulse E, and when the error pulses E are outputted continuously for the N stages of pre-determined sync-in testing circuits, the circuit 3 regards the situation as one where the word synchronization has not yet been established. Then, the phase of the word counter 2 is shifted by one bit. The testina circuit 3 judges that when the syndrome calculated by the syndrome calculating circuit 1 stays zero for the sequence of M times, the word synchronization has been established.

The above operation can be expressed numerically as follows. More particularly, the received signals can be expressed in a polinomial as follows:${\text{R₀(X) = a₀X}}^{\text{n-1}} {\text{+ a₁X}}^{\text{n-2}} {\text{+..+ a}}_{\text{n-2}} {\text{X + a}}_{\text{n-1}}$
wherein the received signals are represented by .......a₋₂, a₋₁, a₀, a₁, a₂,....aₙ₋₁, aₙ.....
and signals of a correct block by
a₀, a₁, ....aₙ₋₁.

The symbol + means the addition in modules 2 herein. The polinomial representation Rₖ(X) of the received signal which has slipped by k bit in the initial phase becomes as follows:${\text{R}}_{\text{k}} {\text{(X) = a}}_{\text{k}} {\text{X}}^{\text{n-1}} {\text{+ a}}_{\text{k+1}} {\text{X}}^{\text{n-2}} {\text{+..+a}}_{\text{n+k-1}} {\text{X + a}}_{\text{n+k-1}}$

If it is assumed that the root of a generator polinomial G (X) = 0 is α, the value of the syndrome can be obtained by substituting X = α in the receiver polinomial. Therefore, the syndrome in the correct initial phase becomes as follows:$\text{S₀ = R₀(α)} {\text{= a₀α}}^{\text{n-1}} {\text{+ a₁α}}^{\text{n-2}} \text{+ ....} {\text{+ a}}_{\text{n-2}} {\text{α + a}}_{\text{n-1}} \text{= 0}$
The syndrome at the initial phase slipped by one bit can be obtained from the expression below.$\text{S₊₁ = R₊₁(α)} {\text{= a₁α}}^{\text{n-1}} {\text{+ a₂α}}^{\text{n-2}} {\text{+ ... + a}}_{\text{n-1}} {\text{α + a}}_{\text{n}} {\text{= R₀(α)α + a}}_{\text{n}} {\text{+ a₀α}}^{\text{n}} {\text{= R₀ (α)α + (a}}_{\text{n}} {\text{+ a₀) (∵ α}}^{\text{n}} \text{=1)} {\text{= (a}}_{\text{n}} \text{+ a₀) ⁰}$
If it is assumed that aₙ = a₀, the syndrome becomes zero. Similarly, the syndromes at the phase which has slipped by one or two bits can be expressed as below.${\text{S₋₁ = (a₋₁ + a}}_{\text{n-1}} {\text{)α}}^{\text{n-1}}$${\text{S₋₂ = (a₋₂ + a}}_{\text{n-2}} {\text{)α}}^{\text{n-2}} {\text{+ (a₋₁ + a}}_{\text{n-1}} {\text{)α}}^{\text{n-2}}$${\text{S₊₂ = (a₀ + a}}_{\text{n}} {\text{)α¹ + (a₁ + a}}_{\text{n+1}} \text{)α⁰}$

Therefore, when the initial phase is slipped in either direction by one or two bits, the syndrome becomes zero at the probabilities of 1/2 and 1/4 respectively. The word synchronization is established when the word with syndrome of zero continues for the sequence of M times as sync-in testing circuits are generally provided in a word synchronization circuit. Accordingly, synchronization slips at the probabilities of (1/2)^{M}, (1/4)^{M},....

In the case when synchronization slip occurs, the error pulses are counted by a sync-out testing circuit according to the prior art circuit structure, and the error pulses generate for the sequence of N times, and the situation is judged that the synchronism is lost, and the word synchronization is reset once again.

However, the prior art method is detrimental in that when a large number is used as the sequence of N times, synchronization slip is detected only after it is repeated for N times in the process of establishing synchronization to increase the time needed for synchronization slip detection as a whole. It further prolongs the time needed for recovery of normal operation. If the number of times N is made excessively small, on the other hand, even if synchronization has been established, when bit errors are caused for some reason, it judges bit errors as synchronization slip to execute the process of establishing synchronization to disturb stable synchronization.

From US-A-4 481 648 a system of the above mentioned kind is known establishing a word synchronization without a synchronization signal and furthermore teaching to calculate a syndrome, to find its zero, and to find synchronization establishment. This known system may work well when the phase slip is iarge because the possibility that the syndome becomes wrongly zero is then very low. However, when the phase slip is only one bit, the system of D1 attains a false synchronization with the probability of 1/2. Together with the known system a protection circuit with a large number of stages has to be employed which means that the time duration for the establishement of synchronization is correspondingly long. Furthermore, the system of D1 may detect an error, however, it does not detect the position of the error.

This invention aims to solve the above mentioned problems encountered in the prior art, and to provide a word synchronization system which can detect the conditions of synchronization slip, if occurring, securedly as well as quickly and is not likely to detect a synchronization slip if a small number of bit errors are caused in transmission signals.

According to the invention it is provided that
a word counter inputting a word synchronization pulse to the syndrome calculating circuit and the synchronization slip detecting circuit is provided,
the synchronization slip decision being outputted when the particular syndrome is repeatedly detected for K₀ times out of the sequence of K times in the outputs from the syndrome calculating circuit (wherein K₀≦K≦M) to reset the word phase and/or the word counter.

The particular syndrome as used herein is a syndrome which is not zero and in which an error pulse appears at the first bit of a word.

It is possible to provide m syndrome calculating circuits each connected with a means for generating a word synchronization pulse when the syndrome becomes zero for the sequence M times, the synchronization slip detecting circuit outputting the synchronization slip decision when all the calculated syndromes are a particular syndrome.

With the signal for slipping in word synchronization mentioned above, it becomes possible to change the initial phase or to reset the word synchronization, or both.

According to this invention, secured performance is guaranteed even if the number of stages, M, is set as a large number, and as a synchronization slip detecting circuit is provided separately, the judgement of the synchronization slip can be made quickly without the necessity of waiting for the M time repetition to immediately proceed to the phase reset or synchronization step. As it is least likely for the synchronization slip detecting circuit to judge bit errors in transmission of signals as a synchronization slip, stable synchronization can be maintained.

FIG. 1 is a block diagram to show the first embodiment of this invention (in correspondence to said first aspect of this invention).

FIG. 2 is a circuit diagram to show an embodiment in structure of a synchronization slip detecting circuit thereof.

FIG. 3 is a chart of waveforms to explain the operation of said circuit.

FIG. 4 is a circuit diagram to show another embodiment of the syndrome calculating circuit and synchronization slip detecting circuit thereof.

FIG. 5 is a chart to show an embodiment of a structure to which this invention may be applied corresponding to the second aspect of this invention wherein encoders and decoders are inserted for each system respectively.

FIG. 6 is a block diagram to show the second embodiment system of this invention (corresponding to the second aspect).

FIG. 7 is a block diagram to show an embodiment of the synchronization slip detecting circuit in construction.

FIG. 8 is a block diagram to show the third embodiment system of this invention (corresponding to the third aspect).

FIG. 9 is a circuit diagram to show a synchronization slip detecting circuit thereof.

FIG. 10 is a circuit diagram to show a decision circuit included in the synchronization slip detecting circuit for discriminating a system of synchronization slip.

FIG. 11 is a chart to show signal waveforms for describing the performance of the decision circuit.

FIG. 12 is a block diagram to show the fourth embodiment system according to this invention (corresponding to the fourth aspect which utilizes Gray codes).

FIG. 13 is a block diagram to show a prior art circuit.

FIG. 14 is a graph to explain the effect of this invention in actual measurement for keeping synchronization. In the figures, following numerals denote the parts described.
1....a syndrome calculating circuit,
2....a word counter, 3....a testing circuit,
5....a slip detecting circuit,
6....a slip detecting circuit,
7....a gate circuit, 8....a testing counter

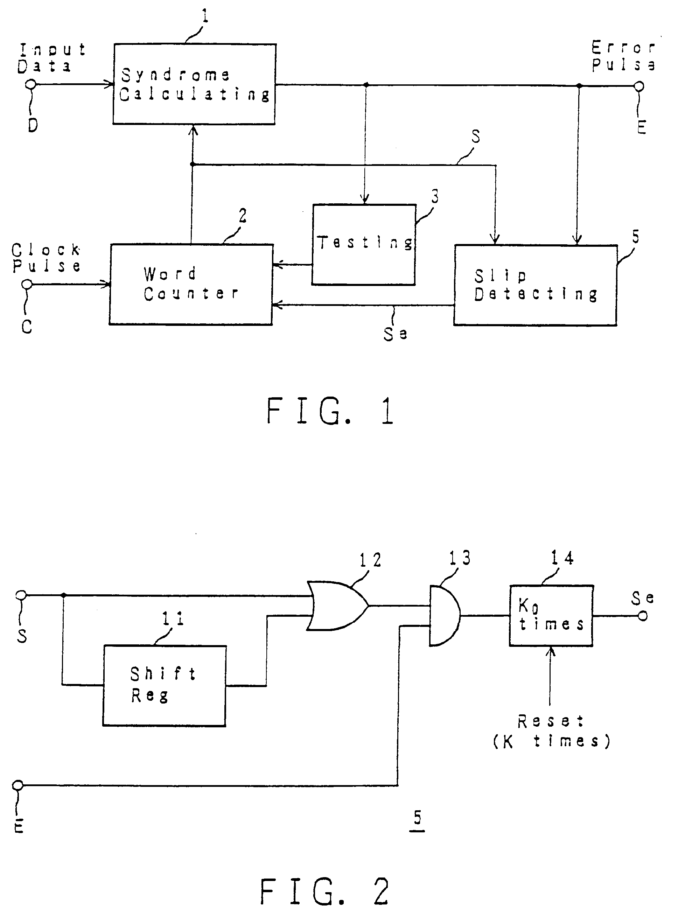

FIG. 1 is a block diagram of the first embodiment of this invention circuit. The circuit includes a syndrome calculating circuit 1 which inputs encoded signals with error correction codes at a terminal D and calculates a syndrome from one initial phase, a testing circuit 3 as a controlling means which inputs an error pulse at a terminal E when the calculated syndrome by the above circuit is not 0, the error pulse being the pulse to be issued at the timing of an error, changes the initial phase of said syndrome calculating circuit 1 to newly calculate the syndrome, and repeates the operation until the syndrome becomes 0 for the sequence of M times, and a word counter 2. The circuit according to this invention is characterized in that a synchronization slip detecting circuit 5 is provided to output the signals for slipping in word syndrome Se when a particular syndrome appears in the output from said syndrome calculating circuit for more than K₀ time during the sequence of K times (K₀ ≦ K ≦ M).

FIG. 2 is a structural view of the synchronization slip detecting circuit 5 which receives as input the word synchronization pulse S outputted from the word counter 2 and an error pulse E for error occurrence timing from the syndrome which is calculated for a word based on one phase by the syndrome calculating circuit 1. The word synchronization pulse S is delayed by one bit by a shift register 11 and together with the word synchronization pulse S is inputted at both terminals of an OR 12. The output from the OR 12 is inputted at an AND 13 together with the error pulse E, and the output therefrom is sent out to a synchronization slip decision output Se via a testing counter 14. The testing counter 14 is reset every time the syndrome calculating circuit 1 executes the calculation of the syndrome for the time of K, and sends out the outputs when the counted number reaches K₀. The counter 14 is adapted to prevent misjudgement of the errors which are caused in the first or the last bit of a block when a synchronization has been normally established. At the normal synchronization, the probability of error generation at the first or the last bit is 2r (r is an error rate). If a synchronization slip detecting signals is made to issue only when an error occurs in either the first or the last bit in a block for the sequence of K times by employing the counter 14, the probability of such a signal can be reduced to (2r)^{k} in the normal synchronization.

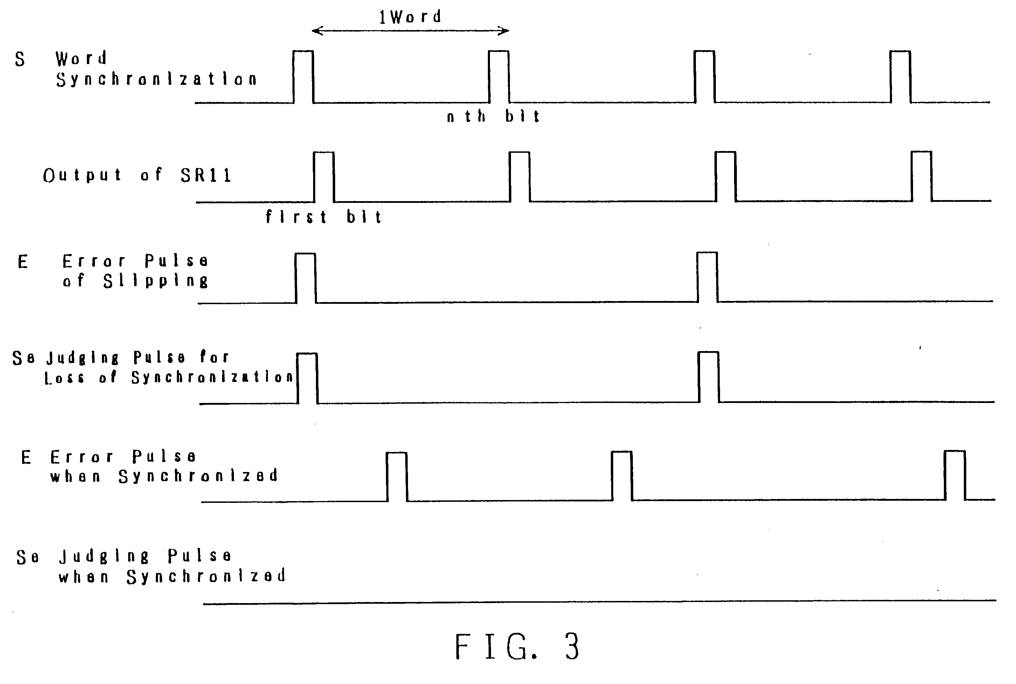

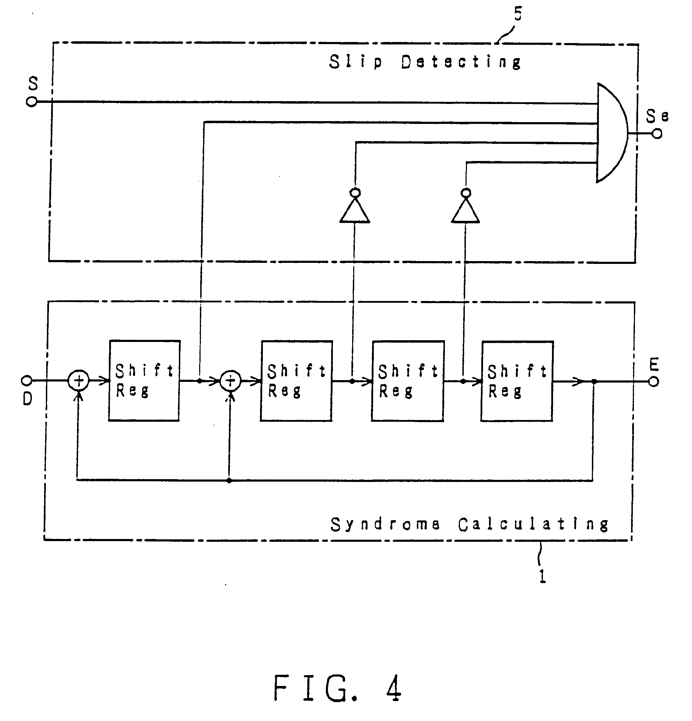

FIG. 3 is an explanatory view of the performance of the synchronization slip detecting circuit 5. For facilitating understanding, it is assumed herein that the following relation holds:$\text{K = K₀ = 1}$
More particularly, the testing counter 14 is omitted, and the output from the AND 13 is designated as a synchronization slip decision output Se. The word synchronization pulse S is a signal generated at the nth bit or the last bit of each block, and is shifted by one bit when outputted at the output of the shift register 11. In other words, the signal appears at the first bit of each block. Error pulse E occurs at the first bit or the last bit when synchronization is slipped. Therefore, synchronization slip output Se is outputted at the output of the AND 13. On the other hand, even if a bit error is caused in transmitted signals when normal synchronization has been established, and an error pulse is outputted from the syndrome calculating circuit 1, the possibility of the error pulse generating at the first bit is as small as 2/n, and it occurs at a random position as shown in FIG. 4E′. The error pulse therefore rarely appears at the AND 13, and never appears at the synchronization slip decision output Se′. By using the synchronization slip detecting circuit 5, the slip can be detected immediately, and, moreover, the probability of misjudgement becomes as small as 2/n times of the transmission error rate when the syndrome becomes other than zero by a bit error instead of a synchronization slip.

As the error pulses due to synchronization slip appear repeatedly at the first bit or the last bit while the error pulses due to the bit error do not appear repeatedly, the two types of errors become more effectively distinguishable if appropriate values K and K₀ are set at the testing counter 14.

When a synchronization slip decision output Se is outputted, the word counter 2 executes either one of the two operations; the first method to change the initial phase (e.g. shifting one bit), and the second method to set word synchronization anew once more by resetting the word counter. Both methods may be executed simultaneously.

As the method to shift bit one by one is used generally in the word synchronization systems, and synchronization slip often occurs one bit before the initial phase, the first method is superior to the second method as it can establish synchronization more quickly.

The system can judge whether the synchronization slip occurs one bit before or one bit after according to the timing of the error pulse. The synchronization can therefore be established still faster if the initial phase is shifted one bit after when the error pulse is positioned at the first bit of the block, and it is shifted one bit before when the error pulse generates at the last bit of the block.

When the word synchronization pulse occurs at the first bit of a block, the timing of the last bit can be obtained by shifting the pulse by (n - 1) bit. In this case, it is advantageous to construct the system in a manner that error pulses can be shifted in the unit of one bit.

It is also possible to detect a synchronization slip directly from the syndrome value instead of using error pulses. A case where the generator polynomial on the GF (2) is expressed as below is exemplified to describe BHC codes.$\text{1 + X + X⁴}$
If it is assumed that the root of the generator polynomial is α, the vector representations of α⁰ = 1, α⁽ⁿ⁻¹⁾ = α¹⁴ become (1000) and (1001) respectively. Therefore, by detecting the syndrome thereof, the synchronization slip can directly be detected without using error pulses.

FIG. 4 shows a calculating method of syndrome when a divider circuit is used. As shown in the figure, the divider circuit is provided with plural shift registers. In the above example, the number of shift registers is four. After the completion of the arithmetic operation, the values stored in the shift registers become the vector representation or the remainder. The circuit 1 shown in FIG. 4 can construct the system as the synchronization slip detection signal occurs when the values at the shift registers are (1000) or (1001) after the completion of the syndrome operation.

This example utilizes the features of cyclic codes wherein the size and location of an error are obtained from the result of syndrome calculation to correct the error in hypercomplex BHC codes obtained by extending the BHC codes into hypercomplex. Synchronization detecting signals can be obtained from the syndrome or the error location obtained therefrom.

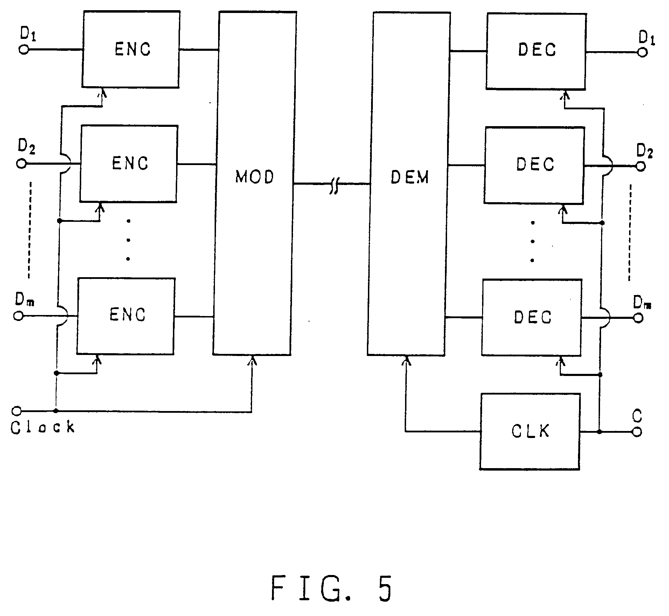

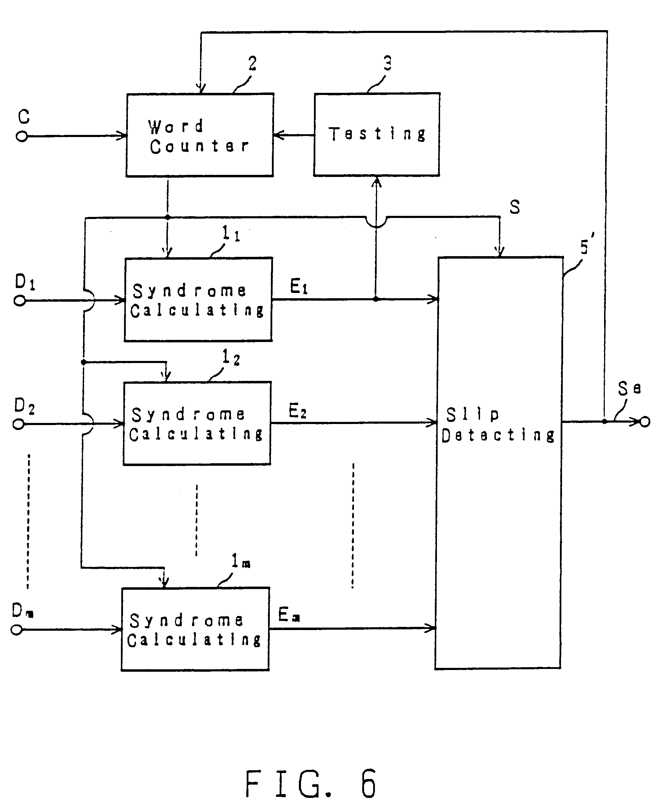

This invention is applicable to the communication system shown in FIG. 5. In the system shown in FIG. 5, an encoder and a decoder are inserted in each of the plural systems of the number of m with the initial phases thereof identical to each other so that one word synchronization is used commonly for all the signals of the m systems. FIG. 6 is a block diagram of the second embodiment of this invention system applicable to the above. In this embodiment, one each circuit (1₁ - 1ₘ) is provided for m systems to receive the encoded signals including error correction codes and having identical initial phases from the plural m systems and calculates a syndrome from one of the initial phases. A set of a word counter 2 and a testing circuit 3 are provided further to each of the m systems as a means for changing said initial phase until the syndrome becomes zero for the sequence of M when the calculated syndrome is not zero and which issues word synchronization pulse when the syndrome becomes zero for the sequence of M. The system according to this invention is characterized by a synchronization slip detecting circuit 5′ which outputs the slip signal in the word synchronization when all the syndromes become a particular value in all the m systems (or the phases of all the word synchronization pulses are detected not to be aligned).

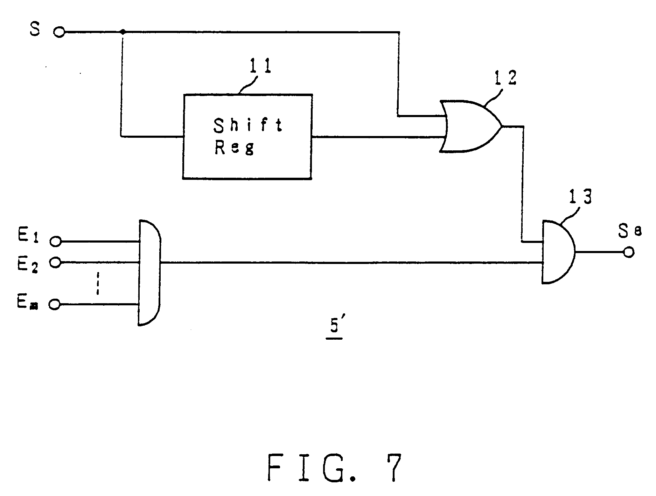

FIG. 7 is a block diagram to show an embodiment of the synchronization slip detecting circuit 5′ in structure. The characteristics of this circuit may be understood more easily by comparing it with the one shown in FIG. 2. This embodiment can detect a synchronization slip when error pulses E₁ through Eₘ are outputted simultaneously for the signals of m systems without the necessity of counting synchronization slip detection for K₀ times.

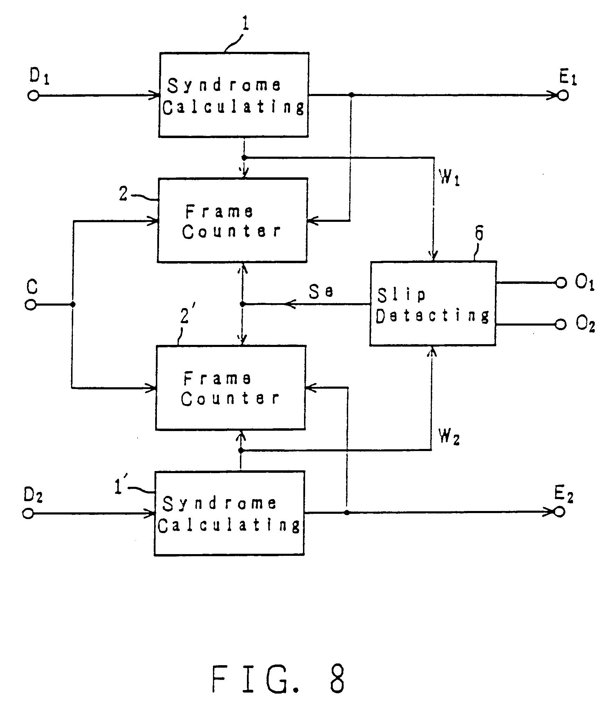

FIG. 8 is a block diagram to show the third embodiment of this invention wherein a synchronization slip is detected by using the fact that if normal word synchronization is established for the signals of plural m systems of which initial phases are identical to each other, the phases of the word synchronization pulses are constantly identical to each other.

FIG. 8 shows the case where m = 2 or wherein syndromes are calculated for two data inputs D₁ and D₂ by the circuits 1 and 1′. When the syndromes are not zero respectively, the syndrome calculating circuits 1 and 1′ output error pulses E₁ and E₂. More particularly, each of the systems includes a circuit 1 or 1′ which receives encoded signals including error correction codes and having identical initial phases from the plural or m systems, and a frame counter 2 or 2′ which includes a means to change said initial phases until the time the syndrome becomes zero for the sequence of M times when the calculated syndrome is not zero and a means which issues word synchronization pulses when the syndrome becomes zero for the sequence of M times. This invention system is characterized by the provision of a synchronization slip detecting circuit 6 which detects whether or not all the phases of the word synchronization pulses are identical to each other in all the m systems, and outputs synchronization slip signals when they are not identical.

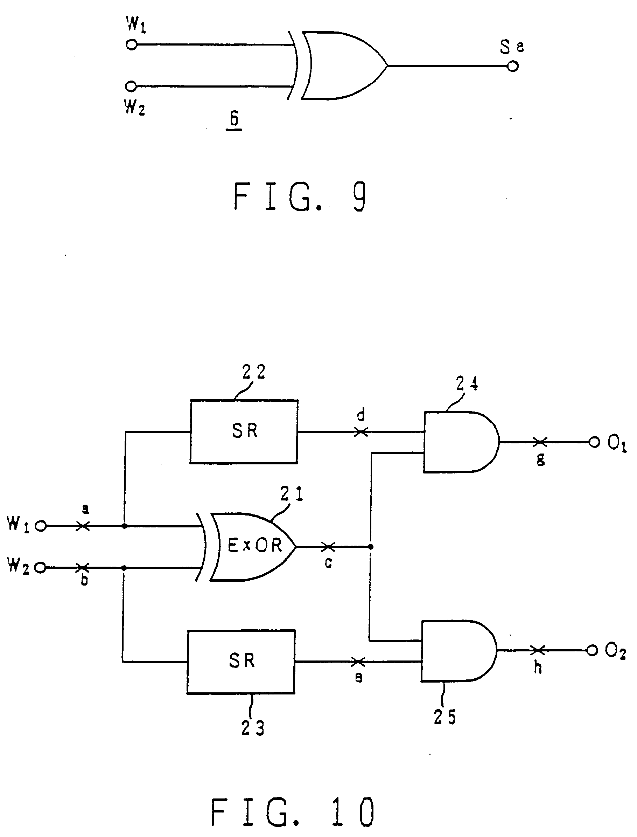

FIG. 9 shows a structural view of such a synchronization slip detecting circuit wherein if the phase of word synchronization is aligned with the inputs from the plural m systems (the number of m is 2 in this embodiment), the circuit does not output, but when there is any system of which phase is not identical to the same, it outputs the synchronization slip output Se from the output thereof.

FIG. 10 is a block diagram to show an embodiment of a decision circuit which discriminates the system where synchronization is not established. The decision circuit is included within the synchronization slip detecting circuit 6 to control the frame counter 2 or 2′ with the output thereof O₁ or O₂. The circuit may be constructed with an exclusive OR 21 which receives as input word synchronization pulses from the systems, shift registers which shift the word synchronization pulses of each system by one bit, and two ANDs 24, 25 which receive as inputs the outputs from the shift registers and the outputs from the exclusive OR 21.

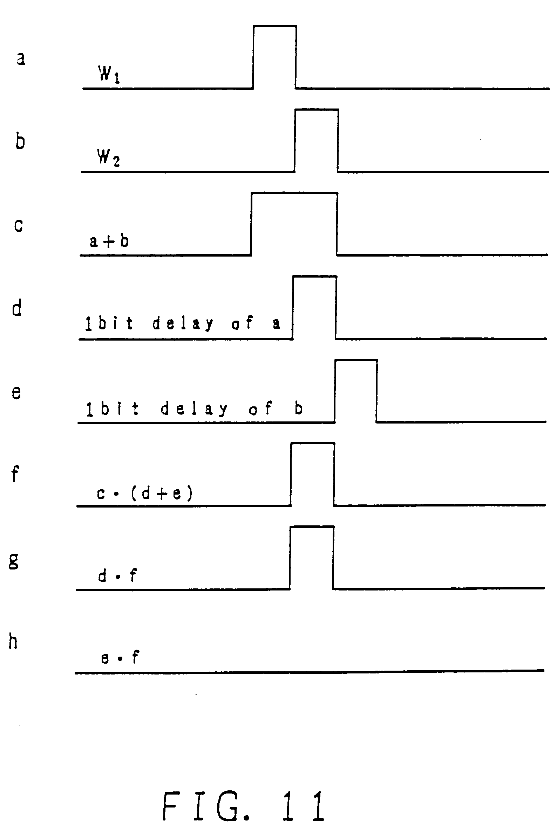

FIG. 11 is a chart to show the performance of the above circuit wherein the letters a through h denote signal waveforms at the points marked with crosses in FIG. 10. If it is assumed that there is a synchronization slip at the word synchronization pulse W₁ but is normal at the pulse W₂, the output from the exclusive OR 21 becomes as the one denoted with the letter c, the signals delayed by one bit by shift registers respectively as the ones denoted with the letters d and e, and the signals indicating synchronization slip are issued to the outputs of the AND 24 as shown by the letter g. No signal indicating a synchronization slip is outputted at the output of the AND 25 as shown by the letter h.

When the synchronization slip detection output Se is outputted, the word counter (2 or 2′) changes the initial phase of the particular system which is judged as a synchronization slip (e.g. by shifting it by one bit). Alternatively, it resets the counter to set the word synchronization anew. The circuit may be structured to execute the above two operations simultaneously.

When the number of the sync-in testing circuit stages is assumed to be M, a synchronization slip occurs at the probability of (1/2)^{M}. On the other hand, if it is assumed that the number of the sync-in testing circuit stages is N in the word synchronization circuits of m systems, the probability to generate a synchronization slip in the m systems simultaneously becomes (1/2)^{mM}, which is extremely low. As the word synchronization establishes synchronous state by shifting in the unit of a bit, synchronization slip is often caused one bit before the correct initial phase. Therefore, the word synchronization may be established more quickly by shifting it by one bit.

When the slip is caused one bit after the normal word synchronization phase or when the slip is caused in the plural systems simultaneously, a normal synchronization slip is established after shifting one bit, and it is reset by a conventional testing circuit.

As described in the foregoing statement, this invention synchronization slip detecting circuit can quickly detect slips in synchronization for the signals of m systems to quickly recover the word synchronization.

FIG. 12 is a block diagram to show the fourth embodiment of this invention wherein this invention is applied to multi-level modulated signals obtained by encoding the signals with Gray code. In FIG. 12 multilevel signals which have been encoded with error correction codes for each system and converted into Gray codes are inputted in parallel at input terminals D₁ through Dₘ in the number of m. The signals of the terminals D₁ through Dₘ are inputted at syndrome calculating circuits 1₁ through 1ₘ to be calculated from a certain initial phase with the word synchronization pulse issued from a common word counter 2. When the syndromes calculated by the circuits are not zero, the initial phase of the particular circuit is altered to calculate the syndrome anew and the operation is repeated until the particular syndrome becomes zero for the sequence of M times. A testing circuit 3 is provided as the controlling means for the above operation. This invention system is characterized by the provision of a synchronization slip detecting circuit comprising a gate circuit 7 which detects simultaneous generation of the signals at the plural systems indicating the location of code errors in each system and a testing counter which outputs a synchronization slip output in word synchronization when the output of the above circuit is detected more than K₀ times in the sequence of K (K₀ ≦ K ≦ M).

The gate 7 generates the output when it receives inputs simultaneously at more than two inputs out of the inputs thereof in the number of m. The counter 8 is a testing counter which counts the outputs from the gate 7 and which is reset every time the syndrome calculating circuits 1₁ through 1ₘ run their operation for K times, and starts the outputs when the counted number reaches K₀. Synchronization slip is detected by utilizing the fact that when signals from m systems arrive to cause a slip, a synchronization slip is always caused at more than two systems in the case of Gray codes obtained by encoding signals with error correction codes separately for each of the system.

When the output of the testing counter indicates the output of a synchronization slip, the word counter executes either one or both of the operations; i.e. to change the initial phase or to reset the word counter to establish the word synchronization anew.

When the word synchronization is established by shifting one-bit by one-bit, a slip is often caused one bit before the initial phase. In such a case, the first method mentioned above can establish synchronization more quickly than the second method. When a slip is caused one bit after the correct initial phase, the word counter 2 is reset by the operation similar to the conventional method with a testing circuit 3 after shifting it by one bit. As mentioned above, a synchronization slip can be detected quickly by using the characters of codes effectively.

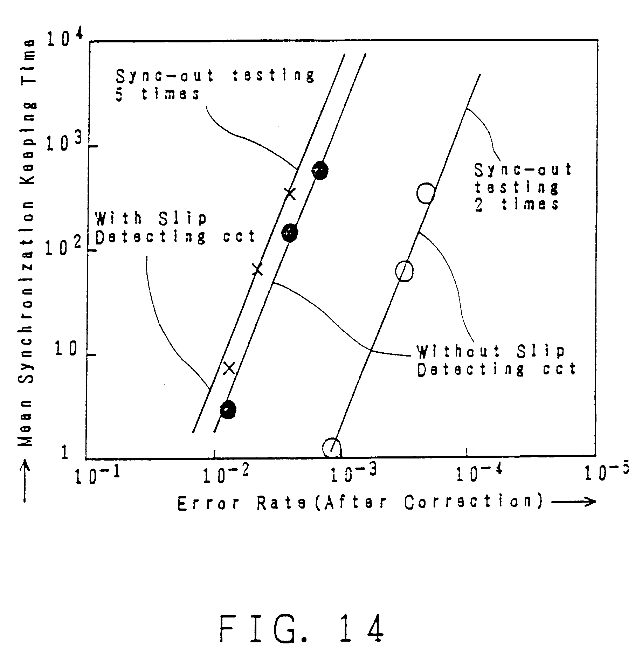

Effects of this invention will now be demonstrated by the actually measured values. FIG. 14 is a table to show the measurement relation between the error rate and the mean synchronization keeping time with or without a synchronization slip detecting circuit by using 256 QAM MODEM which incorporates LSI for double error correction BCH having the code length of 255. The average time from the time when a random error by noise was applied to a normal synchronized state to the time when synchronization was detected slipping by slip detection was measured. It was found that when the number of sync-out testing circuit stage is two, synchronization slips with BER as low as ca. 1 x 10⁻⁴ after correction. It was judged that the appropriate number of the sync-out testing stages was five or higher. The frequency of the clock signal was 12.5 MHz. The table shows comparison of the above with the case where the number of the sync-in testing circuit stages is five. When the number of the stages was two, the maximum time for synchronization was 11.6 msec to cause no problems. Due to inappropriate sync-out testing stages, it cannot be used practically. When the number of sync-out testing circuit stages is increased to five, there are no difficulties in synchronization keeping time, but the time for setting synchronization increases to make the use impractical as shown in the table. When a synchronization slip detecting circuit is utilized, on the other hand, as it needs only counting error pulses when a slip is caused, the average synchronization keeping time can be maintained at a sufficiently high level at the normal state while the time needed for establishment of final synchronization can be reduced to 4.6 msec.

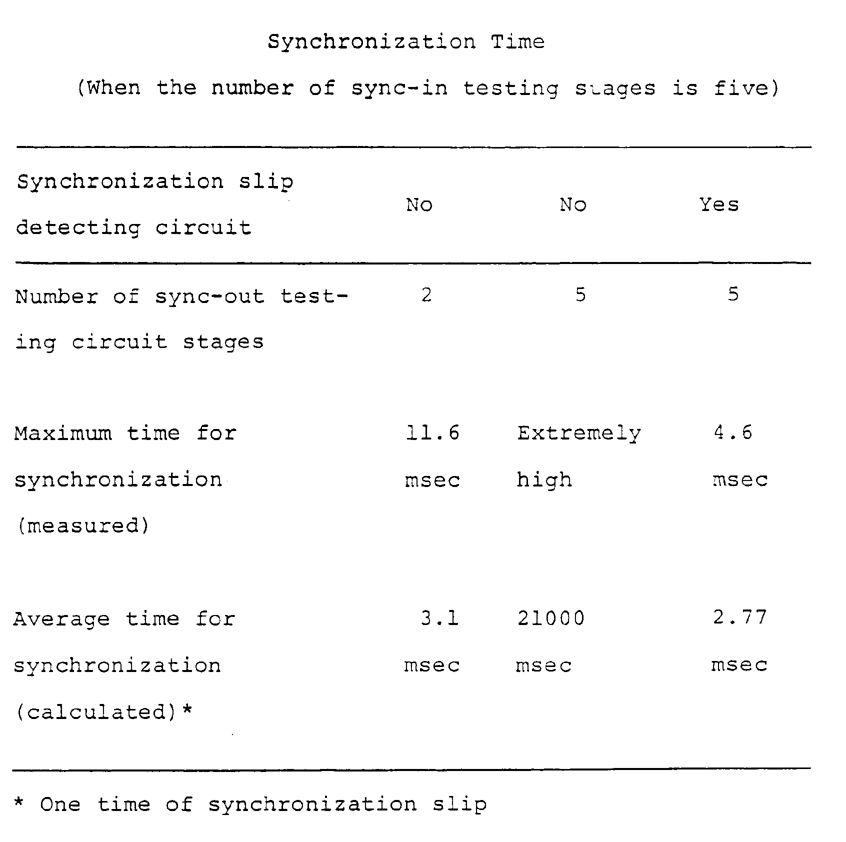

As described in detail in the foregoing statement, in addition to the synchronization slip made by conventional testing counters, another synchronization slip detecting circuit is provided in this invention to quickly detect the slip in synchronization to thereby enable resetting of the phase or resetting of the synchronization counter. As the synchronization slip detecting circuit is least likely to be actuated with bit errors in transmitted signals, synchronization can be maintained stably without slipping therefrom because of bit errors.

## Claims

1. A word synchronization system comprising
a syndrom calculating circuit (1) which receives as input encoded signals including error correction codes and calculates a syndrome as an indication of a synchronization state out of a word phase,
a controlling means (3) which changes the word phase when the syndrome calculated by the syndrome calculating circuit (1) is not zero to calculate the syndrome again and repeats the operation until the time the syndrome becomes zero for the sequence of M times, and
a synchronization slip detecting circuit (5) to output a synchronization slip decision (Se) in the word synchronization when a particular syndrome is repeatedly detected,
characterized in that
a word counter (2) inputting a word synchronization pulse (S) to the syndrome calculating circuit (1) and the synchronization slip detecting circuit (5) is provided,
the synchronization slip decision (Se) being outputted when the particular syndrome is repeatedly detected for Kₒ times out of the sequence of K times in the outputs from the syndrome calculating circuit (1), wherein Kₒ ≦ K ≦ M, to reset the word phase and/or the word counter (2).

2. The system of claim 1, characterized in that m syndrome calculating circuits (1) each connected with a means for generating a word synchronization pulse when the syndrome becomes zero for the sequence of M times are provided and the synchronization slip detecting circuit (5) outputs the synchronization slip decision (Se) when all the calculated syndromes are a particular syndrome.

## Patentansprüche

1. Wortsynchronisationssystem, umfassend
einen Syndromberechnungskreis (1), der als Eingang kodierte, Fehlerkorrekturcodes einschließende Signale empfängt und ein Syndrom als eine Indikation eines Synchronisationszustandes aus einer Wortphase berechnet,
ein Steuermittel (3), das die Wortphase ändert, wenn das durch den Syndromberechnungskreis (1) berechnete Syndrom nicht null ist, um das Syndrom erneut zu berechnen, und die Operation bis zu dem Zeitpunkt wiederholt, zu dem das Syndrom für die Folge von M-Malen null wird, und
einen Synchronisationsverschiebungs-Detektionskreis (5), um eine Synchronisationsverschiebungs-Entscheidung (Se) in die Wortsynchronisation auszugeben, wenn ein bestimmtes Syndrom wiederholt festgestellt wird,
dadurch gekennzeichnet, daß
ein Wortzähler (2), der einen Wortsynchronisationspuls (S) in den Syndromberechnungskreis (1) und den Synchronisationsverschiebungs-Detektionskreis (5) eingibt, vorgesehen ist,
wobei die Synchronisationsverschiebungs-Entscheidung (Se) ausgegeben wird, wenn das bestimmte Syndrom wiederholt während Kₒ-Malen aus der Folge von K-Malen in den Ausgängen von dem Syndromberechnungskreis (1) entdeckt wird, wobei Kₒ ≦ K ≦ M ist, um die Wortphase und/oder den Wortzähler (2) zurückzusetzen.

2. System nach Anspruch 1, dadurch gekennzeichnet, daß m Syndromberechnungskreise (1), die jeweils mit einem Mittel zum Erzeugen eines Wortsynchronisationspulses, wenn das Syndrom für die Folge von M-Malen null wird, verbunden sind, vorgesehen sind, und der Synchronisationsverschiebungs-Detektionskreis (5) die SynchronisationsverschiebungsEntscheidung (Se) ausgibt, wenn all die berechneten Syndrome ein bestimmtes Syndrom sind.

## Revendications

1. Système de synchronisation par mot comprenant :
un circuit (1) de calcul de syndrome qui reçoit en entrée des signaux codés contenant des codes de correction d'erreur et calcule un syndrome destiné à indiquer un état de synchronisation présentant un déphasage de mot,
un moyen de commande (3) qui fait varier la phase de mot quand le syndrome calculé par le circuit (1) de calcul de syndrome n'est pas égal à zéro afin de calculer à nouveau le syndrome et de répéter l'opération jusqu'au moment où le syndrome devient égal à zéro pendant une séquence de M fois, et
un circuit (5) de détection de décalage de synchronisation qui délivre une décision (Se) de décalage de synchronisation de la synchronisation par mot quand un syndrome particulier est détecté de manière répétitive,
caractérisé en ce que
un compteur de mots (2) sert à appliquer une impulsion (S) de synchronisation par mot au circuit (1) de calcul de syndrome et au circuit (5) de détection des décalages de synchronisation,
la décision (Se) de décalage de synchronisation étant délivrée lorsque le syndrome particulier est détecté de manière répétitive pendant K_{O} fois au cours de la séquence de K fois dans les sorties du circuit de calcul de syndrome (1), (avec K₀ ≦ K ≦ M) pour rétablir la phase par mot et/ou ramener à zéro le compteur de mots (2).

2. Système selon la revendication 1, caractérisé en ce que m circuits (1) de calcul de syndrome sont connectés chacun à un moyen d'établissement d'une impulsion de synchronisation par mot quand le syndrome devient égal à zéro pendant la séquence de M fois sont prévus et en ce que le circuit (5) de détection et de décalage de synchronisation délivre la décision (Se) de décalage de synchronisation lorsque tous les syndromes calculés sont un syndrome particulier.
